# EUROPÄISCHE PATENTSCHRIFT

(11) **EP 0 751 835 B1**
(45) Veröffentlichungstag und Bekanntmachung des Hinweises auf die Patenterteilung: **30.12.1998**
(21) Anmeldenummer: 95911291.3
(22) Anmeldetag: 04.03.1995
(51) Int. Cl.: B05C 11/10, B05C 7/00, B05B 15/12

(54) **ANLAGE ZUR HOHLRAUMKONSERVIERUNG**
HOLLOW SPACE CONSERVATION SYSTEM
SYSTEME DE CONSERVATION D'ESPACES CREUX

(30) Priorität: 05.03.1994 DE 4407435
(43) Veröffentlichungstag der Anmeldung: 08.01.1997
(73) Patentinhaber: Dürr Ecoclean GmbH, 70794 Filderstadt (DE)
(72) Erfinder: ALVAREZ-VEGA, Antonio, D-52224 Stolberg (DE); STOLLENWERK, Herbert, D-52152 Simmerath (DE)
(74) Vertreter: Haecker, Walter, Dipl.-Phys.
(86) Internationale Anmeldenummer: EP9500798
(87) Internationale Veröffentlichungsnummer: WO9523651

(56) Entgegenhaltungen:
- CH-A- 335 976
- CH-A- 569 677
- DE-A- 2 755 947
- DE-A- 4 317 628
- US-A- 5 150 727

## Beschreibung

Die Erfindung betrifft eine Anlage zur Hohlraumkonservierung metallischer Gegenstände mittels eines beim Verarbeiten flüssigen Korrosionsschutzmaterials_{,} welche mindestens einen Korrosionsschutzmaterial-Vorratsbehälter und einen Auffangboden für überschüssiges, aus einem zu konservierenden Hohlraum ablaufendes Korrosionsschutzmaterial aufweist, wobei der zu behandelnde Gegenstand zur Hohlraumkonservierung über dem Auffangboden anordenbar ist.

Zur Verhinderung einer Korrosion von metallischen Gegenständen, wie Kraftfahrzeugkarosserien, welche wenigstens einen im normalen Gebrauch nicht zugänglichen Hohlraum aufweisen, ist die sogenannte Hohlraumkonservierung bekannt, bei der die inneren Oberflächen solcher Hohlräume mit einer Schicht aus einem Korrosionsschutzmaterial überzogen werden. Letzteres ist während der Verarbeitung flüssig, sei es infolge eines Lösungsmittels oder infolge Verflüssigung durch Erhitzen. Letzteres wird zur Vermeidung der mit Lösungsmitteldämpfen verbundenen Probleme neuerdings bevorzugt, weshalb als Korrosionsschutzmaterial bevorzugt Wachse oder wachsartige Substanzen eingesetzt werden.

Während früher die verflüssigten Korrosionsschutzmaterialien in die zu konservierenden Hohlräume eingesprüht wurden, werden letztere neuerdings mit dem verflüssigten Korrosionsschutzmaterial geflutet, um eine einwandfreie und vollständige Beschichtung zu gewährleisten, und die vorliegende Erfindung befaßt sich mit einer Anlage zur Hohlraumkonservierung durch Fluten der zu konservierenden Hohlräume mit einem verflüssigten Korrosionsschutzmaterial, welches sich nach dem Aufbringen auf die inneren Oberflächen der konservierten Hohlräume verfestigt und bei den im Betrieb üblicherweise auftretenden Temperaturen auch fest bleibt.

Bekannte Anlagen für eine derartige Hohlraumkonservierung (DE-PS 27 55 947 und DE-PS 29 26 949) weisen für jeden zu konservierenden Hohlraum einen sogenannten Schußbehälter auf, in dem durch Erhitzen verflüssigtes Wachs bevorratet wird. Die Anlagen umfassen ferner eine Aufschmelz- und Wiederaufbereitungsvorrichtung, die auch einen Wachs-Vorratsbehälter aufweist, aus dem die verschiedenen Schußbehälter gespeist werden. Von jedem dieser Schußbehälter führt eine Injektionsleitung zu einer Öffnung des dem betreffenden Schußbehälter zugeordneten Hohlraums, wobei die Injektionsleitung schräg von unten nach oben verlaufend in den mittleren Bereich eines vertikalen, unten und oben offenen Injektionsrohres mündet. Der zu behandelnde Gegenstand in Form einer Fahrzeugkarosserie, in deren unterem Bereich die zu konservierenden Hohlräume liegen, wird auf den Injektionsrohren abgesetzt, wobei letztere so angeordnet sind, daß sie an den dem Fluten der Hohlräume dienenden, nach unten weisenden Hohlraumöffnungen enden. Über eine Druckluft-Zuführungsleitung wird in dem betreffenden Schußbehälter ein Druckluftpolster erzeugt, und mit Hilfe dieses Druckluftpolsters und eines Steuerventils in der Druckluft-Zuführungsleitung wird dann für jeden zu konservierenden Hohlraum eine bestimmte Menge flüssigen Wachses in die diesem Hohlraum zugeordnete Injektionsleitung gedrückt, um den betreffenden Hohlraum mit Wachs zu fluten. Derjenige Teil des flüssigen Wachses, welcher nicht an den inneren Oberflächen des Hohlraumes haften bleibt, fließt über das aufrechtstehende und unten offene Injektionsrohr nach unten ab und wird in einem wannenförmigen, beheizten Auffangboden gesammelt, der sich unter der Fahrzeugkarosserie und unter den Injektionsrohren befindet. Von dort wird das aufgefangene und flüssig gehaltene Wachs über eine mit einer Pumpe versehene Leitung in die Aufschmelz- und Aufbereitungsvorrichtung zurücktransportiert.

Bei diesen bekannten Anlagen steht die den Wachs-Vorratsbehälter aufweisende Wiederaufbereitungsvorrichtung getrennt neben dem wannenförmigen Auffangboden, dessen Außenseiten von den in Reihe hintereinander angeordneten Schußbehältern eingefaßt werden und der die obere Wand eines im Querschnitt ungefähr U-förmigen Ölbehälters bildet, dessen seitliche Behälterteile an die beiden Reihen von Schußbehältern angrenzen. Das Öl dient als Wärmeträgerflüssigkeit, füllt den Ölbehälter vollständig und wird über Heizstäbe beheizt, die in die beiden seitlichen Behälterteile eintauchen. Auf diese Weise wird verhindert, daß aus den Hohlräumen nach unten abfließendes, überschüssiges Wachs sich auf dem Auffangboden verfestigt, so daß dieses über eine von unten in den Auffangboden mündende Ablaufleitung aus der vom Auffangboden gebildeten Wanne abgezogen werden kann. Diese Ablaufleitung führt zur Aufschmelzund Wiederaufbereitungsvorrichtung und enthält ein Filter und eine Förderpumpe. Mit Hilfe des beheizten Ölbehälters werden auch die Schußbehälter beheizt und das in diesen enthaltene Wachs flüssig gehalten. Außer dem Ölbehälter dieser bekannten Anlagen muß natürlich auch deren Aufschmelz- und Wiederaufbereitungsvorrichtung beheizt werden, und dasselbe gilt für alle Verbindungsleitungen zwischen letzterer und dem Auffangboden sowie den Schußbehältern.

Bei den heute üblichen Produktionsanlagen zur Hohlraumkonservierung ist der wannenförmige Auffangboden mit einer Heißwasser-Beheizungsvorrichtung ausgestattet, die Schußbehälter sind als eigenständig beheizte Behälter ausgebildet und an den Außenseiten des U-förmigen Auffangbodens angeordnet, und die von den Schußbehältern wegführenden Injektionsleitungen sind durch die Wände des Auffangbodens hindurchgeführt.

Bezüglich des Aufwandes für die Anlage sowie des Beheizungsaufwandes günstiger ist die Hohlraumkonservierungsanlage gemäß der älteren Patentanmeldung DE-A-43 17 628 der Firma Dürr GmbH, bei der an die Stelle der Schußbehälter Steuerventilvorrichtungen treten, welche in eine als Ringleitung ausgebildete Wachs-Zufuhrleitung eingesetzt sind, die ständig von heißem, flüssigem Wachs durchströmt wird. Zu diesem Zweck besitzt diese Anlage einen Korrosionsschutzmaterial-Vorratsbehälter, in den eine Heizvorrichtung eingebaut ist und von dem eine eine Förderpumpe enthaltende Speiseleitung zu der erwähnten Ringleitung führt. An anderer Stelle zweigt von der Ringleitung eine Bypass-Leitung ab, in der sich ein einstellbares Drosselventil oder ein Überdruckventil befindet und die über ein Filter mit dem Korrosionsschutzmaterial-Vorratsbehälter verbunden ist. Auch diese Anlage besitzt einen wannenförmigen Auffangboden, dessen Ablauf vor dem Filter in die Bypass-Leitung einmündet. Auf diese Weise werden die Ringleitung, die Speiseleitung und die Bypass-Leitung sowie das Filter ständig von heißem Wachs durchströmt, und zwar auch dann, wenn Hohlräume gerade nicht mit Wachs geflutet werden, so daß auf eine Beheizung der Steuerventilvorrichtungen verzichtet werden kann.

Der Erfindung lag nun die Aufgabe zugrunde, eine Anlage der eingangs erwähnten Art, wie sie im Stand der Technik z. B. durch die DE-PS 27 55 947 bekanntgeworden ist, so zu verbessern, daß dadurch die Investitionskosten, die ein Betreiber einer solchen Anlage aufwenden muß, gesenkt werden, und erfindungsgemäß läßt sich diese Aufgabe dadurch lösen, daß der Auffangboden auf dem Vorratsbehälter angeordnet wird.

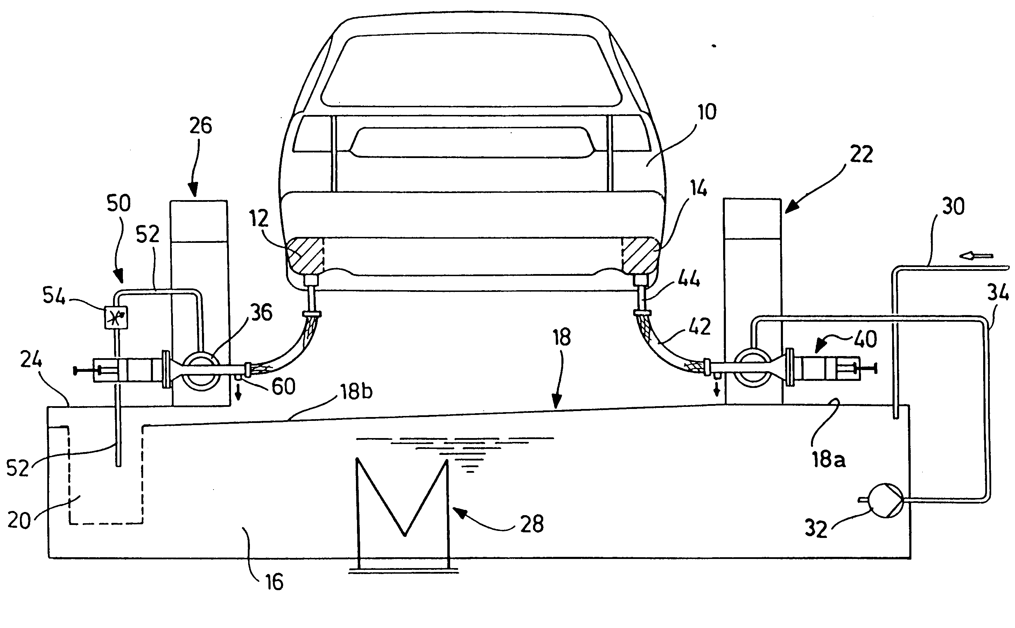

Die erfindungsgemäße Lösung trägt in zweierlei Weise zur Kostenreduzierung bei: Ein erster Kostenfaktor einer Produktionsanlage ist die Größe des von dieser Anlage benötigten Hallenraums; während bei den bekannten Anlagen, wie sie z. B. die DE-PS 27 55 947 zeigt, der Korrosionsschutzmaterial-Vorratsbehälter, d. h. derjenige Behälter, in dem das für die verschiedenen, zu konservierenden Hohlräume erforderliche Korrosionsschutzmaterial bevorratet wird - die einzelnen Schußbehälter sind also nicht als Vorratsbehälter im Sinne der vorliegenden Erfindung zu verstehen -, neben der Einheit steht, die den Ölbehälter, die Schußbehälter und den wannenförmigen Auffangboden beinhaltet, befindet sich bei der erfindungsgemäßen Anlage der Vorratsbehälter unter dem ohnehin eine bestimmte, durch die zu behandelnden Gegenstände vorgegebene Fläche einnehmenden Auffangboden (obwohl in Fig. 3 der älteren Patentanmeldung DE-A-43 17 628 der Firma Dürr GmbH der Vorratsbehälter unter dem Auffangboden gezeichnet ist, kann dies nicht als Anordnung im Sinne der vorliegenden Erfindung gewertet werden, weil diese Zeichnung ersichtlich nur eine schematische Darstellung ist und somit nicht davon ausgegangen werden kann, daß diese ältere Anmeldung den Gedanken offenbart, bei einer realisierten Anlage nach dieser Anmeldung den Vorratsbehälter räumlich unter dem Auffangboden anzuordnen); handelt es sich bei dem zu verarbeitenden Korrosionsschutzmaterial um ein durch Erhitzen verflüssigbares Material (grundsätzlich kommen aber auch mit Hilfe eines Lösungsmittels verflüssigte Korrosionsschutzmaterialien für eine Verarbeitung in der erfindungsgemäßen Anlage in Frage), übernimmt in der erfindungsgemäßen Anlage der Korrosionsschutzmaterial-Vorratsbehälter, welcher ohnehin beheizt werden muß, um die dort bevorratete große Menge an Korrosionsschutzmaterial im flüssigen Zustand zu halten, auch die Aufgabe, den Auffangboden zu beheizen, so daß im Vergleich zu den bekannten Anlagen, wie sie sich beispielsweise aus der DE-PS 27 55 947 und der DE-PS 29 26 949 ergeben, deren Ölbehälter samt Beheizung entfallen kann, wodurch nicht nur Herstellkosten, sondern auch Betriebskosten eingespart werden, und zwar selbst dann, wenn die erfindungsgemäße Anlage in Analogie zu den bekannten Anlagen mit Schußbehältern versehen ist, weil dann diese in der bekannten Weise durch eigene Beheizungsvorrichtungen auf Temperatur gehalten werden können.

Bei einer besonders vorteilhaften Ausführungsform der erfindungsgemäßen Anlage bildet der Auffangboden direkt die obere Wand des Korrosionsschutzmaterial-Vorratsbehälters, obwohl es natürlich grundsätzlich möglich wäre, den Vorratsbehälter mit einer separaten oberen Wand zu versehen, wobei dann nur für einen guten Wärmeübergang zwischen dieser oberen Wand und dem Auffangboden gesorgt werden müßte, wenn das verarbeitete Korrosionsschutzmaterial ein solches ist, welches durch Erhitzen verflüssigt wird. Die erste Alternative ist aber natürlich die kostengünstigere und auch raumsparendere, und sie läßt auch jede gewünschte Gestaltung des Auffangbodens zu.

Vorteilhaft ist es auch, wenn bei einer erfindungsgemäßen Anlage, bei der zur Zufuhr von Korrosionsschutzmaterial zu einem zu konservierenden Hohlraum eine aus dem Vorratsbehälter mittels einer Pumpe mit Korrosionsschutzmaterial speisbare Korrosionsschutzmaterial-Zufuhrleitung vorgesehen ist, die Pumpe als Tauchpumpe ausgebildet und im Vorratsbehälter angeordnet wird. Dadurch kann nicht nur eine Leitung zwischen Vorratsbehälter und Pumpe, die man sonst beheizen müßte, entfallen, sondern es ist auch bei abgeschalteter Pumpe gewährleistet, daß sich in dieser das Korrosionsschutzmaterial nicht verfestigen kann.

Entsprechendes gilt für eine weitere vorteilhafte Gestaltung der erfindungsgemäßen Anlage dadurch, daß ein zur Aufbereitung des im Kreislauf geführten Korrosionsschutzmaterials vorgesehenes Filter im Vorratsbehälter angeordnet ist. In diesem Fall kann ein Ablauf des Auffangbodens unmittelbar am Einlaß des Filters vorgesehen werden, was es insbesondere ermöglicht, ein einfaches, oben offenes Siebkorb-Filter zu verwenden, das sich unmittelbar vom Ablaufbereich des Auffangbodens nach unten in den Korrosionsschutzmaterial-Vorratsbehälter hinein erstreckt und deshalb stets einfach und gut zugänglich ist, sei es für eine Reinigung oder für einen Austausch.

Entsprechend der in der älteren patentanmeldung DE-A-43 17 628 der Firma Dürr GmbH beschriebenen Hohlraumkonservierungsanlage wird auch die Anlage nach der vorliegenden Erfindung zweckmäßigerweise so ausgebildet, daß zur Zufuhr von Korrosionsschutzmaterial zu mehreren Stellen eines oder mehrerer zu behandelnder Gegenstände mehrere Korrosionsschutzmaterial-Injektionsleitungen vorgesehen werden, welche aus der als Ringleitung ausgebildeten Korrosionsschutzmaterial-Zufuhrleitung mit Korrosionsschutzmaterial gespeist werden können und jeweils mit einer Steuerventilvorrichtung versehen sind (wobei an diese Ringleitung auch Schußbehälter angeschlossen sein können), und daß eine Korrosionsschutzmaterial-Überströmvorrichtung vorgesehen wird, über die sowie das Filter die Ringleitung mit dem Vorratsbehälter in Verbindung steht. Auf diese Weise kann die erwähnte Pumpe auch außerhalb der eigentlichen Behandlungsvorgänge im Dauerbetrieb arbeiten und es werden alle von dem Korrosionsschutzmaterial durchströmten Elemente stets auf einer Temperatur gehalten, bei der das Korrosionsschutzmaterial flüssig ist. Besitzt eine solche Anlage keine Schußbehälter, sondern die Steuerventilvorrichtungen gemäß der älteren Patentanmeldung P 43 17 628.3, so empfiehlt es sich auch für eine erfindungsgemäße Anlage, diese Steuerventilvorrichtungen in die Ringleitung einzusetzen und sie so durch das in der Ringleitung zirkulierende heiße Korrosionsschutzmaterial zu beheizen.

Schließlich empfiehlt es sich noch, die von der Pumpe mit Korrosionsschutzmaterial gespeiste Zufuhrleitung so zu gestalten und anzuordnen, daß sie ein solches Gefälle aufweist, daß ihr Inhalt bei Pumpenstillstand in den Vorratsbehälter hinein abläuft, um so auf eine Fremdbeheizung der Zufuhrleitung verzichten zu können. Dieser Gedanke läßt sich auch dann verwirklichen, wenn die Zufuhrleitung als Ringleitung ausgebildet ist.

Weitere Merkmale, Vorteile und Einzelheiten der Erfindung ergeben sich aus der nachfolgenden Beschreibung sowie der beigefügten zeichnerischen Darstellung einer besonders vorteilhaften Ausführungsform, wobei die Zeichnung eine Prinzipdarstellung der erfindungsgemäßen Anlage ist und einen Querschnitt zeigt, und zwar einen Schnitt quer zur Längsachse einer in der Zeichnung dargestellten Fahrzeugkarosserie, welche mehrere zu konservierende Hohlräume aufweist.

Die Zeichnung zeigt eine schematisch und im Schnitt quer zu ihrer Längsachse dargestellte Fahrzeugkarosserie 10, welche mehrere zu konservierende Hohlräume aufweist, von denen zwei bei 12 und 14 schematisch angedeutet sind.

Die erfindungsgemäße Anlage besitzt einen als Ganzes mit 16 bezeichneten, allseitig geschlossenen, d. h. nach Art eines Tanks ausgebildeten Korrosionsschutzmaterial-Vorratsbehälter, dessen obere Wand einen Auffangboden 18 für Korrosionsschutzmaterial bildet, das nach dem Fluten der Karosserie-Hohlräume mit flüssigem Korrosionsschutzmaterial aus diesen heraus nach unten abläuft und abtropft.

Der Auffangboden 18 könnte nach Art einer Wanne gestaltet sein; bei der dargestellten, bevorzugten Ausführungsform ist er jedoch fast eben ausgebildet und umfaßt einen zumindest ungefähr horizontalen Bereich 18a sowie einen gegenüber der Horizontalen geneigten Ablaufbereich 18b. Wie die Zeichnung erkennen läßt, ist am Vorratsbehälter 16 dem ungefähr horizontalen Bereich 18a gegenüber eine Auflage 24 befestigt, und der Vorratsbehälter 16 bildet im Bereich dieser Auflage und des ungefähr horizontalen Bereichs 18a jeweils eine Art Vorbau zur Aufnahme einer als Tauchkreiselpumpe ausgebildeten Förderpumpe 32 und eines nach oben offenen, topfförmigen Siebkorb-Filters 20, welchletzteres in den geneigten Ablauf-bereich 18b eingesetzt ist. Der geneigte Ablaufbereich 18b des Auffangbodens 18 wird von einer umlaufenden Außenwand umschlossen, von der nur kastenförmige Längsträger 22 und 26 dargestellt sind; diese umlaufende Außenwand bildet somit zusammen mit dem Ablaufbereich 18b ein "Flutbecken", in das die zu konservierende Karosserie 10 abgesenkt werden kann. Damit die Förderpumpe 32 und das Filter 20 zugänglich sind, besitzt der Vorratsbehälter 16 der erfindungsgemäßen Anlage nicht dargestellte Wartungsklappen.

Es sei in diesem Zusammenhang angemerkt, daß der Vorratsbehälter 16 in Querrichtung selbstverständlich schmäler gestaltet werden kann und nur aus Gründen der zeichnerischen Darstellung mit einer übermäßigen Breite gezeichnet wurde.

In den Vorratsbehälter 16 ist eine Heizvorrichtung 28 eingebaut, um das im Vorratsbehälter enthaltene Korrosionsschutzmaterial, insbesondere Wachs, auf Verarbeitungstemperatur, z. B. 120°C, zu halten - wird ein durch Lösungsmittel verflüssigtes Korrosionsschutzmaterial verarbeitet, kann die Heizvorrichtung 28 natürlich entfallen. Über eine Befülleitung 30 und nicht dargestellte Niveauregulierungsmittel wird die im Vorratsbehälter 16 bevorratete Korrosionsschutzmaterialmenge in einem zulässigen Füllstandsbereich konstant gehalten, wobei der Füllstand natürlich nicht so hoch sein darf, daß das flüssige Korrosionsschutzmaterial nach oben aus dem Filter 20 austritt.

Die Förderpumpe 32 ist in den vom Korrosionsschutzmaterial gefüllten Bereich des Vorratsbehälters 16 eingebaut, und von der Förderpumpe 32 führt eine Korrosionsschutzmaterial-Speiseleitung 34 aus dem Vorratsbehälter 16 heraus und zu einer als Ringleitung gestalteten Korrosionsschutzmaterial-Zufuhrleitung 36, die in der die beiden Längsträger 22 und 26 enthaltenden Außenwand des vorstehend erwähnten Flutbeckens verläuft. Zweckmäßigerweise bildet diejenige Stelle der als Ringleitung ausgebildeten Zufuhrleitung 36, an der die Speiseleitung 34 an die Zufuhrleitung 36 angeschlossen ist, die tiefste Stelle der Ringleitung, so daß bei abgeschalteter Pumpe 32 flüssiges Korrosionsschutzmaterial aus der Zufuhrleitung 36 ablaufen und in den Vorratsbehälter 16 zurücklaufen kann, wenn der Anschluß der Speiseleitung 34 an die Zufuhrleitung 36 nicht wie dargestellt von oben, sondern von unten erfolgt.

In der die beiden Längsträger 22, 26 enthaltenden Außenwand des vorstehend erwähnten Flutbeckens sind mehrere Steuerventilvorrichtungen 40 eingebaut, bei denen es sich um Steuerventilvorrichtungen nach der älteren Patentanmeldung DE-A-43 17 628 der Firma Dürr GmbH handeln soll. Der Auslaß einer jeden dieser Steuerventilvorrichtungen ist mit einem als flexibler Schlauch ausgebildeten Injektionsleitung 42 verbunden, die zu einer aufrechtstehenden, d. h. vertikal orientierten, Anlage-festen Flutdüse 44 führt. Auf diesen Flutdüsen wird eine zu behandelnde Fahrzeugkarosserie 10 durch nicht dargestellte Mittel so abgesetzt, daß an der Unterseite der Fahrzeugkarosserie angeordnete Öffnungen der zu konservierenden Hohlräume dicht an die offenen, oberen Enden der Flutdüsen 44 anschließen. Üblicherweise besitzt jeder der zu konservierenden Hohlräume, z. B. der Hohlräume 12, 14, eine an der Unterseite der Fahrzeugkarosserie liegende Öffnung, so daß die erfindungsgemäße Anlage für jeden zu konservierenden Hohlraum eine Steuerventilvorrichtung 40 und eine Flutdüse 44 aufweist.

Damit nun der von der Zufuhrleitung 36 gebildeten Ringleitung ständig heißes Konservierungsmaterial zugeführt werden kann, und zwar auch dann, wenn alle Steuerventilvorrichtungen 40 geschlossen sind, und um in der Zufuhrleitung 36 ständig einen konstanten Materialdruck aufrechterhalten zu können, ohne daß die Pumpe 32 Druckstößen ausgesetzt wird und mit Null-Förderleistung arbeiten muß, ist an einer Stelle, die insbesondere dem Anschluß der Speiseleitung 34 an die Zufuhrleitung 36 gegenüberliegt, eine Überströmvorrichtung 50 vorgesehen, im wesentlichen bestehend aus einer von der Zufuhrleitung 36 abzweigenden Bypass-Leitung 52 und einem in diese eingebauten, einstellbaren Drosselventil 54, welches auch durch ein Überdruckventil mit vorzugsweise einstellbarem Öffnungsdruck ersetzt werden könnte. Diese Bypass-Leitung 52 endet im Siebkorb des Filters 20, sie könnte aber auch oberhalb des Auffangbodens 18 enden.

Wegen weiterer Einzelheiten wird auf die Unterlagen der älteren Anmeldung DE-A-43 17 628 verwiesen, deren gesamte Offenbarung auch zum Gegenstand der vorliegenden Anmeldung gemacht werden soll.

Wie die Zeichnung erkennen läßt, liegen nicht nur alle zu behandelnden Hohlräume 12, 14 der gerade zu konservierenden Fahrzeugkarosserie über dem Auffangboden 18, sondern auch Ablauföffnungen 60 der Steuerventilvorrichtungen 40, so daß nach dem Fluten der Karosserie-Hohlräume 12, 14 aus diesen ablaufendes, überschüssiges, flüssiges Korrosionsschutzmaterial auf den Auffangboden 18 abfließt und von dort in das Filter 20 gelangt.

Wie sich der vorstehenden Beschreibung der dargestellten bevorzugten Ausführungsform der erfindungsgemäßen Anlage entnehmen läßt, zeichnen sich bevorzugte Ausführungsformen der Erfindung insbesondere dadurch aus, daß die am Konservierungsverfahren direkt teilnehmenden Elemente der Anlage, nämlich Auffangboden und die zur Aufrechterhaltung des Verfahrenskreislaufes notwendigen Aufbereitungsvorrichtungen, Pumpen und Wärmeübertragungsvorrichtungen, in den Korrosionsschutzmaterial-Vorratsbehälter integriert sind.

Die aufgrund der Überströmvorrichtung 50 stets gewährleistete Kreislaufführung des Korrosionsschutzmaterials hat neben der ständigen Beheizung derjenigen Teile, die beheizt werden müssen, noch den Vorteil einer guten Homogenisierung (Durchmischung) des Korrosionsschutzmaterials, und da außerhalb des eigentlichen Konservierungsvorgangs bei abgeschalteter Pumpe 32 die Zufuhrleitung 36, die Speiseleitung 34 und - bei entsprechendem Verlauf und entsprechendem Anschluß - auch die Bypass-Leitung 52 sich in den Vorratsbehälter 16 hinein entleeren können, kann bei einem durch Erhitzen verflüssigbaren Korrosionsschutzmaterial auf eine Fremdbeheizung dieser Leitungen verzichtet werden, so daß bei bevorzugten Ausführungsformen der erfindungsgemäßen Anlage nur und ausschließlich der Vorratsbehälter 16 mit einer Heizvorrichtung versehen werden muß, mit der gegebenenfalls auch noch festes Korrosionsschutzmaterial im Vorratsbehälter aufgeschmolzen werden kann.

Aus den vorstehenden Ausführungen ergibt sich, daß aus der als Ringleitung gestalteten Korrosionsschutzmaterial-Zufuhrleitung 36 statt der Steuerventilvorrichtungen 40 auch Schußbehälter gespeist werden könnten, wie sie aus dem eingangs diskutierten Stand der Technik bekannt sind.

## Patentansprüche

1. Anlage zur Hohlraumkonservierung metallischer Gegenstände, insbesondere von Fahrzeugkarosserien, mittels eines beim Verarbeiten flüssigen Korrosionsschutzmaterials, mit mindestens einem Korrosionsschutzmaterial-Vorratsbehälter (16) und mit einem Auffangboden (18) für überschüssiges, aus einem zu konservierenden Hohlraum ablaufendes Korrosionsschutzmaterial, wobei der zu behandelnde Gegenstand zur Hohlraumkonservierung über dem Auffangboden (18) anordenbar ist, **dadurch gekennzeichnet,** daß der Auffangboden (18) auf dem Vorratsbehälter (16) angeordnet ist.

2. Anlage nach Anspruch 1, dadurch gekennzeichnet, daß der Auffangboden (18) die obere Wand des Vorratsbehälters (16) bildet.

3. Anlage nach Anspruch 1 oder 2, dadurch gekennzeichnet, daß zur Zufuhr von Korrosionsschutzmaterial zu einem zu konservierenden Hohlraum (12, 14) eine aus dem Vorratsbehälter (16) mittels einer Pumpe (32) mit Korrosionsschutzmaterial speisbare Korrosionsschutzmaterial-Zufuhrleitung (36) vorgesehen ist und daß die Pumpe (32) als Tauchpumpe ausgebildet und im Vorratsbehälter (16) angeordnet ist.

4. Anlage nach einem oder mehreren der vorstehenden Ansprüche, dadurch gekennzeichnet, daß ein zur Aufbereitung des im Kreislauf geführten Korrosionsschutzmaterials vorgesehenes Filter (20) im Vorratsbehälter (16) angeordnet ist.

5. Anlage nach Anspruch 4, dadurch gekennzeichnet, daß ein Korrosionsschutzmaterial-Ablauf des Auffangbodens (18) an den Einlaß des Filter (20) angeschlossen und so mit dem Inneren des Vorratsbehälters (16) verbunden ist.

6. Anlage nach den Ansprüchen 3 und 4 oder 5, dadurch gekennzeichnet, daß zur Zufuhr von Korrosionsschutz-material zu mehreren Stellen (12, 14) eines oder mehrerer zu behandelnder Gegenstände (10) mehrere Korrosionsschutzmaterial-Injektionsleitungen (42) vorgesehen sind, welche über Schußbehälter aus der als Ringleitung ausgebildeten Korrosionsschutzmaterial-Zufuhleiteitung (36) mit Korrosionsschutzmaterial speisbar sind.

7. Anlage nach den Ansprüchen 3 und 4 oder 5, dadurch gekennzeichnet, daß zur Zufuhr von Korrosionsschutz-material zu mehreren Stellen (12, 14) eines oder mehrerer zu behandelnder Gegenstände (10) mehrere Korrosionsschutzmaterial-Injektionsleitungen (42) vorgesehen sind, welche aus der als Ringleitung ausgebildeten Korrosionsschutzmaterial-Zufuhleitung (36) mit Korrosionsschutzmaterial speisbar und jeweils mit einer Steuerventilvorrichtung (40) versehen sind.

8. Anlage nach Anspruch 6 oder 7, dadurch gekennzeichnet, daß eine Korrosionsschutzmaterial-Übersrömvorrichtung (50) vorgesehen ist, über die sowie das Filter (20) die Ringleitung (36) mit dem Vorratsbehälter (16) in Verbindung steht.

9. Anlage nach einem oder mehreren der vorstehenden Ansprüche, dadurch gekennzeichnet daß zur Verarbeitung eines durch Erhitzen verflüssigbaren Korrosionsschutzmaterials eine Korrosionsschutzmaterial-Beheizungsvorrichtung (28) in den Vorratsbehälter (16) integriert ist.

10. Anlage nach den Ansprüchen 7 und 9, dadurch gekennzeichnet, daß die Steuerventilvorrichtungen (40) in die Ringleitung (36) eingesetzt sind.

11. Anlage nach einem oder mehreren der Ansprüche 3 bis 10, dadurch gekennzeichnet, daß die Zufuhrleitung (36) ein solches Gefälle aufweist und derart angeordnet ist, daß ihr Inhalt bei Pumpenstillstand in den Vorratsbehälter (16) hinein abläuft.

## Claims

1. Installation for protecting the cavities of metal articles by means of a, during processing, liquid anticorrosive material, having at least one anticorrosive material storage container (16) and having a collecting tray (18) for excess anticorrosive material discharged from a cavity to be protected, the article to be treated being disposable for cavity protection over the collecting tray (18), characterized in that the collecting tray (18) is disposed on the storage container (16).

2. Installation according to claim 1, characterized in that the collecting tray (18) forms the top wall of the storage container (16).

3. Installation according to claim 1 or 2, characterized in that, for supplying anticorrosive material to a cavity (12, 14) to be protected, an anticorrosive material supply line (36) is provided, which may be supplied with anticorrosive material from the storage container (16) by means of a pump (32), and that the pump (32) takes the form of a submersible pump and is disposed in the storage container (16).

4. Installation according to one or more of the preceding claims, characterized in that a filter (20), which is provided for processing the circulated anticorrosive material, is disposed in the storage container (16).

5. Installation according to claim 4, characterized in that an anticorrosive material outlet of the collecting tray (18) is connected to the inlet of the filter (20) and hence is connected to the interior of the storage container (16).

6. Installation according to claims 3 and 4 or 5, characterized in that, for supplying anticorrosive material to a plurality of points (12, 14) of one or more articles (10) to be treated, a plurality of anticorrosive material injection lines (42) are provided, which may be supplied via shot containers with anticorrosive material from the anticorrosive material supply line (36) in the form of a ring line.

7. Installation according to claims 3 and 4 or 5, characterized in that, for supplying anticorrosive material to a plurality of points (12, 14) of one or more articles (10) to be treated, a plurality of anticorrosive material injection lines (42) are provided, which may be supplied with anticorrosive material from the anticorrosive material supply line (36) in the form of a ring line and are each provided with a control valve apparatus (40).

8. Installation according to claim 6 or 7, characterized in that an anticorrosive material overflow apparatus (50) is provided, the ring line (36) communicating with the storage container (16) via said overflow apparatus and the filter (20).

9. Installation according to one or more of the preceding claims, characterized in that, for processing an anticorrosive material which is liquefiable by heating, an anticorrosive material heating apparatus (28) is integrated in the storage container (16).

10. Installation according to claims 7 and 9, characterized in that the control valve apparatuses (40) are inserted into the ring line (36).

11. Installation according to one or more of claims 3 to 10, characterized in that the supply line (36) has such a descending gradient and is disposed in such a way that its contents, when the pump is stopped, discharge into the storage container (16).

## Revendications

1. Système de traitement anticorrosion d'espaces creux d'objets métalliques, en particulier de carrosseries de véhicules, au moyen d'un matériau anticorrosion fluide lors du traitement, comportant au moins un réservoir (16) de matériau anticorrosion et une goulotte de collecte (18) pour le matériau anticorrosion en excès qui s'écoule d'une espace creux à traiter, dans lequel l'objet à traiter anticorrosion peut être disposé au dessus de la goulotte de collecte (18), caractérisé par le fait que la goulotte de collecte (18) est disposée sur le réservoir (16).

2. Système selon la revendication 1, caractérisé par le fait que la goulotte de collecte (18) forme la paroi supérieure du réservoir (16).

3. Système selon la revendication 1 ou 2, caractérisé par le fait que, pour amener le matériau anticorrosion à un espace creux (12, 14) à traiter anticorrosion est prévue une conduite (36) d'amenée du matériau anticorrosion qui peut être alimentée en matériau anticorrosion à partir du réservoir (16) au moyen d'une pompe (32) et que la pompe (32) est conçue sous forme de pompe immergée, disposée dans le réservoir (16).

4. Système selon l'une des revendications précédentes, caractérisé par le fait qu'un filtre (20) prévu pour la préparation du matériau anticorrosion recyclé est disposé dans le réservoir (16).

5. Système selon la revendication 4, caractérisé par le fait qu'une vidange de la goulotte de collecte (18) sur le matériau anticorrosion est reliée à l'entrée du filtre (20) et donc reliée avec l'intérieur du réservoir (16).

6. Système selon les revendications 3 et 4 ou 5, caractérisé par le fait que pour amener du matériau anticorrosion à plusieurs endroits (12, 14) d'un ou de plusieurs objets (10) à traiter sont prévues plusieurs conduites (42) d'injection de matériau anticorrosion qui peuvent être alimentées en matériau anticorrosion, par l'intermédiaire de récipients d'injection à partir de la conduite (36) d'amenée de matériau anticorrosion conçue sous forme de conduite annulaire.

7. Système selon les revendications 3 et 4 ou 5, caractérisé par le fait que pour amener du matériau anticorrosion à plusieurs endroits (12, 14) d'un ou de plusieurs objets (10) à traiter sont prévues plusieurs conduites (42) d'injection de matériau anticorrosion, qui peuvent être alimentés en matériau anticorrosion à partir de la conduite (36) d'amenée du matériau anticorrosion conçue sous forme de conduite annulaire et sont chacune munies d'un dispositif de vanne de manoeuvre (40).

8. Système selon les revendications 6 ou 7, caractérisé par le fait qu'est prévu un dispositif (50) de trop-plein de matériau anticorrosion par l'intermédiaire duquel, ainsi que du filtre (20), la conduite annulaire (36) est reliée au réservoir (16).

9. Système selon l'une ou plusieurs des revendications précédentes, caractérisé par le fait que pour le traitement d'un matériau anticorrosion rendu fluide par chauffage, un dispositif (28) de chauffage du matériau anticorrosion est intégré dans le réservoir (16).

10. Système selon les revendications 7 et 9, caractérisé par le fait que les dispositifs de vanne de manoeuvre (40) sont logés dans la conduite annulaire (36).

11. Système selon une ou plusieurs des revendications 3 à 10, caractérisé par le fait que la conduite d'amenée (36) présente une pente telle, et est disposée de façon telle, que, pompe arrêtée, son contenu s' écoule dans le réservoir (16).
